# EUROPÄISCHE PATENTSCHRIFT

(11) **EP 2 888 323 B1**
(45) Veröffentlichungstag und Bekanntmachung des Hinweises auf die Patenterteilung: **11.10.2017**
(21) Anmeldenummer: 13750555.8
(22) Anmeldetag: 16.08.2013
(51) Int. Cl.: B29L 7/00, B29K 505/00, B29K 67/00, B29C 45/00, C08L 67/04

(54) **POLYMERMISCHUNGEN ZUR HERSTELLUNG VON DÜNNWANDIGEN SPRITZGUSSTEILEN**
POLYMER MIXTURES FOR THE PRODUCTION OF THIN-WALLED INJECTION MOLDED PARTS
MÉLANGES POLYMÈRES POUR LA FABRICATION DE PIÈCES MOULÉES PAR INJECTION À PAROIS MINCES

(30) Priorität: 24.08.2012 EP 12181699
(43) Veröffentlichungstag der Anmeldung: 01.07.2015
(73) Patentinhaber: BASF SE, 67056 Ludwigshafen am Rhein (DE)
(72) Erfinder: BUSSMANN, Martin, 67259 Beindersheim (DE); WITT, Uwe, 67112 Mutterstadt (DE); KOHL, Jörg, 67071 Ludwigshafen (DE)
(74) Vertreter: BASF IP Association
(86) Internationale Anmeldenummer: PCT/EP2013/067102
(87) Internationale Veröffentlichungsnummer: WO 2014/029692

(56) Entgegenhaltungen:
- EP-A1- 2 335 746
- WO-A1-2006/097353
- WO-A1-2009/024836
- WO-A1-2010/034712
- US-A1- 2004 248 486
- US-A1- 2012 009 103
- US-A1- 2012 107 527
- D. Rosato: "Rosato's Plastics Encyclopedia and Dictionary", 12. Dezember 1997 (1997-12-12), Hanser Publishers, Munich, Vienna, New York, Barcelona, XP002690643, Seite 379, Seite 379

## Beschreibung

Die vorliegende Erfindung betrifft Spritzgussverfahren zur Herstellung von Verpackungsmaterial mit einer Wanddicke von 0,3 bis 0,8 mm enthaltend biologisch abbaubare Polymermischungen enthaltend:
A) 15 bis 50 Gew.- %, bezogen auf die Komponenten A und B, eines biologisch abbaubaren, aliphatisch-aromatischen Polyesters mit einem MFR (190°C/2,16 kg nach ISO 1133) von 40 bis 150 g/10min enthaltend:
   i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 30 mol %, bezogen auf die Komponenten i bis ii, eines Terephthalsäurederivats;
   iii) 98 bis 100 mol %, bezogen auf die Komponenten i bis ii, eines C₂-C₈-Alkylendiols oder C₂-C₆-Oxyalkylendiols;
   iv) 0 bis 2 Gew.-%, bezogen auf das Gesamtgewicht der Komponenten i bis iii, eines Kettenverlängerers und/oder Verzweigers ausgewählt aus der Gruppe bestehend aus: einem di- oder polyfunktionellen Isocyanat, Isocyanurat, Oxazolin , Epoxid, Carbonsäureanhydrid und/oder einem mindestens trifunktionellen Alkohol oder einer mindestens trifunktionellen Carbonsäure;
B) 50 bis 85 Gew.-%, bezogen auf die Komponenten A und B, Polymilchsäure mit einem MFR (190°C/2,16 kg nach ASTM D1238) von 5 bis 50 g/10min,
C) 0 bis 40 Gew.-%, bezogen auf das Gesamtgewicht der Komponenten A bis D, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonit, Talkum, Glasfasern und Mineralfasern und
D) 0 bis 3 Gew.-%, bezogen auf das Gesamtgewicht der Komponenten A bis D, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs.

Aus der WO 2006/074815 ist die Verwendung von biologisch abbaubaren Polymermischungen enthaltend aliphatisch/aromatische Polyester A und Polymilchsäure B zur Herstellung von Spritzgussartikeln und Blasfolien bekannt. Von den vorliegenden Mischungen unterscheiden sich diejenige aus WO 2006/074815 insbesondere im MFR der verwendeten Polymerkomponente A. In der WO 2006/074815 kommen verzweigte und/oder kettenverlängerte Polyester mit einem MFR von kleiner 10 cm³/10 min zum Einsatz. Für das Dünnwandspritzgießen sind diese Polymermischungen aufgrund ihrer Fließeigenschaften kaum geeignet.

Ziel der vorliegenden Erfindung war es somit Polymermischungen bereitzustellen, die sich fürs Dünnwandspritzgießen eignen und Spritzgussartikel mit guten mechanischen Eigenschaften liefern. Ein leichtfließendes Polymer für Spritzgussanwendungen liegt insbesondere vor, wenn beim Fließspiraltest ein Fließweg/Wanddicken-Verhältnis von mindestens 200 erreicht wird. Bei 1 mm Spiraldicke können Fließweglängen von mindestens 200 mm realisiert werden.

Überraschenderweise ist ein durch Dünnwand- Spritzguss hergestellter Artikel enthaltend:
A) 15 bis 50 Gew.- %, bezogen auf die Komponenten A und B, eines biologisch abbaubaren, aliphatisch-aromatischen Polyesters mit einem MFR (190°C/2,16 kg nach ISO 1133) von 40 bis 150 g/10min enthaltend:
   i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 30 mol %, bezogen auf die Komponenten i bis ii, eines Terephthalsäurederivats;
   iii) 98 bis 100 mol %, bezogen auf die Komponenten i bis ii, eines C₂-C₈-Alkylendiols oder C₂-C₆-Oxyalkylendiols;
   iv) 0 bis 2 Gew.-%, bezogen auf das Gesamtgewicht der Komponenten i bis iii, eines Kettenverlängerers und/oder Verzweigers ausgewählt aus der Gruppe bestehend aus: einem di- oder polyfunktionellen Isocyanat, Isocyanurat, Oxazolin , Epoxid, Carbonsäureanhydrid und/oder einem mindestens trifunktionellen Alkohol oder einer mindestens trifunktionellen Carbonsäure;
B) 50 bis 85 Gew.-%, bezogen auf die Komponenten A und B, Polymilchsäure mit einem MFR (190°C/2,16 kg nach ASTM D1238) von 5 bis 50 g/10min,
C) 0 bis 40 Gew.-%, bezogen auf das Gesamtgewicht der Komponenten A bis D, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern und
D) 0 bis 3 Gew.-%, bezogen auf das Gesamtgewicht der Komponenten A bis D, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
sowohl hinsichtlich der Mechanik, der Wärmeformbeständigkeit und des biologischen Abbauverhaltens optimiert.

Für das geforderte Fließverhalten und das interessante Eigenschaftsprofil des Artikels sind insbesondere die Komponenten A und B verantwortlich.

Im Folgenden wird die Erfindung näher beschrieben.

Die Herstellung der für die Erfindung geeigneten aliphatisch-aromatischen Polyester A ist beispielsweise in der WO 2009/127555 näher beschrieben, auf die hier ausdrücklich Bezug genommen wird.

Polyester A sind in der Regel wie folgt aufgebaut:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 100 mol %, bezogen auf die Komponenten i bis ii, eines C₂-C₈-Alkylendiols oder C₂-C₆-Oxyalkylendiols;
iv) 0 bis 2 Gew.-%, bezogen auf das Gesamtgewicht der Komponenten i bis iii, eines Kettenverlängerers und/oder Verzweigers ausgewählt aus der Gruppe bestehend aus: einem di- oder polyfunktionellen Isocyanat, Isocyanurat, Oxazolin , Epoxid, Carbonsäureanhydrid und/oder einem mindestens trifunktionellen Alkohol oder einer mindestens trifunktionellen Carbonsäure; vorzugsweise 0,01 bis 1,5 Gew.-% eines mindestens trifunktionellen Alkohols.

Die Synthese der beschriebenen Copolyester erfolgt vorzugsweise in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat des gewünschten Molekulargewichts umgesetzt. Auf der anderen Seite kann der Polyester auch durch Umesterung von beispielsweise Polybutylensuccinat (PBS) mit C₈-C₂₀ Dicarbonsäuren in Gegenwart von Diol gewonnen werden. Als Katalysatoren werden üblicherweise Zink-, Aluminium- und insbesondere Titankatalysatoren eingesetzt. Titankatalysatoren wie Tetra(isopropyl)orthotitanat und insbesondere Tetraisobutoxytitanat (TBOT) haben gegenüber den in der Literatur häufig verwendeten Zinn-, Antimon-, Kobalt- und Bleikatalysatoren wie beispielsweise Zinndioctanoat den Vorteil, dass im Produkt verbleibende Restmengen des Katalysators oder Folgeprodukt des Katalysators weniger toxisch sind.

Bevorzugt ist ein Verfahren zur kontinuierlichen Herstellung der Komponente A, wobei eine Mischung aus den aliphatischen Dihydroxyverbindungen, den aliphatischen und aromatischen Dicarbonsäuren, ohne Zugabe eines Katalysators, zu einer Paste vermischt werden oder alternativ die flüssigen Ester der Dicarbonsäuren und die Dihydroxyverbindung und gegebenenfalls weitere Comonomere, ohne Zugabe eines Katalysators, eingespeist werden, wobei
1) diese Mischung zusammen mit der Gesamtmenge oder einer Teilmenge eines Titankatalysators kontinuierlich verestert bzw. umgeestert wird;
2) kontinuierlich das gemäß 1) erhaltene Umesterungs- bzw. Veresterungsprodukt in einem Turmreaktor und im Gleichstrom über einen Fallfilmverdampfer, wobei die Reaktionsdämpfe in situ aus dem Reaktionsgemisch entfernt werden bis zu einer Viskositätszahl nach DIN 53728 von 30 bis 80 cm³/g vorkondensiert wird;
3) kontinuierlich das aus 2) erhältliche Produkt bis zu einer Viskositätszahl nach DIN 53728 von 40 bis 150 cm³/g polykondensiert wird.

Der MFR (Schmelzvolumenrate nach Stufe 3; 190°C/2,16 kg nach ISO1133) liegt bei 40 bis 150 g/10min und vorzugsweise bei 60 bis 110 g/10min. Die hohen Werte (der dünnflüssigen Polyester A) lassen sich exakter bei 170°C bestimmen. Der MFR (Schmelzvolumenrate nach Stufe 3; 170°C/2,16 kg nach ISO1133) liegt dann bei 30 bis 120 g/10min und vorzugsweise bei 50 bis 90 g/10min.

Als Diole iii) kommen ein C₂-C₈-Alkylendiol oder C₂-C₆-Oxyalkylendiol in Frage. Bevorzugt sind die Diole 1,3-Propandiol und 1,4-Butandiol, die aus nachwachsenden Rohstoffen zugänglich sind. Es können auch Mischungen der beiden Diole verwendet werden. Aufgrund der höheren Schmelztemperaturen und der besseren Kristallisation des gebildeten Copolymers ist 1,4-Butandiol als Diol bevorzugt.

In der Regel wird zu Beginn der Polymerisation das Diol (Komponente c) zu den Säuren (Komponenten a und b) in einem Verhältnis von Diol zu Disäuren von 1,0 bis 2,5: 1 und vorzugsweise 1,3 bis 2,2 :1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,90 bis 1 verstanden.

Vorzugsweise werden 0,05 bis 1,5 Gew-%, insbesondere 0,1 bis 0,9 Gew.-% und insbesondere bevorzugt 0,1 bis 0,8 Gew.-% bezogen auf das Gesamtgewicht der Komponenten A bis B, eines Verzweigers vorzugsweise mindestens eines trifunktionellen Alkohols oder mindestens einer trifunktionellen Carbonsäure eingesetzt.

Die Polyester A weisen in der Regel ein zahlenmittleres Molekulargewicht (Mn) im Bereich von 5000 bis 20000, insbesondere im Bereich von 10000 bis 15000 g/mol, und ein gewichtsmittleres Molekulargewicht (Mw) von 10000 bis 100000, vorzugsweise 20000 bis 30000 g/mol und ein Mw/Mn-Verhältnis von 1 bis 6, vorzugsweise 2 bis 4 auf.

Als steife Komponente B wird Polymilchsäure (PLA) eingesetzt.

Polymilchsäure mit dem folgenden Eigenschaftsprofil wird bevorzugt eingesetzt:
- einer Schmelzvolumenrate (MFR bei 190° C und 2.16 kg nach ASTM D1238) von 5 bis 50 insbesondere von 10 bis 40 ml/10 Minuten
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%
- einem Molekulargewicht von größer 80 000 Dalton.

Bevorzugte Polymilchsäuren sind beispielsweise Ingeo® 3051 D und insbesondere Ingeo® 3251 D der Fa. NatureWorks.

Die Polymilchsäure B wird in einem Gewichtsprozent-Anteil, bezogen auf die Komponenten A und B, von 50 bis 85%, vorzugsweise von 55 bis 80% und insbesondere bevorzugt von 60 bis 75% eingesetzt. Hierbei bildet vorzugsweise die Polymilchsäure B die kontinuierliche Phase oder ist Teil einer cokontinuierlichen Phase und der Polyester A bildet die disperse Phase.

In der Regel werden 10 bis 50 Gew.-%, insbesondere 10 bis 40 und besonders bevorzugt 10 bis 35%, bezogen auf das Gesamtgewicht der Komponenten A bis D, mindestens eines mineralischen Füllstoffs ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonit, Talkum und Mineralfasern eingesetzt.

Kreide (Calciumcarbonat) und Talkum (Magnesiumsilikat) sind als Füllstoffe besonders bevorzugt. Interessanterweise hat sich herausgestellt, dass durch den Zusatz von Kreide die biologische Abbaubarkeit der Artikel noch verbessert werden kann. Mit Talkum wiederum lässt sich effektiver das E-Modul erhöhen und die Wärmeformbeständigkeit verbessern.

Als besonders vorteilhaft haben sich Mischungen von Kreide und Talkum erwiesen. Hierbei hat sich ein Mischungsverhältnis von Kreide zu Talkum von 2 : 5 bis 5 : 1, und bevorzugt von 1: 1 bis 3 : 1 als vorteilhaft herausgestellt.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% nach 180 Tagen aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definiertem Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Beim Dünnwandspritzgießen sind Formteile mit Wanddicken kleiner 1 mm oder sogar kleiner 0,5 mm herstellbar. In der Regel weisen die durch Dünnwandspritzgießen hergestellten Formteile eine mittlere Wanddicke von 0,3 bis 0,8 mm und vorzugsweise von 0,4 bis 0,7 mm auf. Damit stellt dieses Verfahren einen interessanten Zugang zu dünnwandigen, spritzgegossenen Artikeln insbesondere im Verpackungsbereich dar. In Frage kommen hier insbesondere Spritzgussartikel mit einer Wanddicke von 0,3 bis 0,8 mm enthaltend die erfindungsgemäßen Polymermischungen wie Trinkbecher, Becher, Schalen, Dosen, Eimer, Behälter - beispielsweise für Molkereiprodukte oder auch Schalen - gegebenenfalls einschließlich Deckel - für Gefriergut, Eiscreme, Wurstwaren, Fleisch und Obst.

Das Dünnwandspritzgießen mit Materialien wie Polypropylen wird beispielsweise in Plastverarbeiter 55 (2004) Seite 24 ff und Plastverarbeiter 53 (2002) Seite 28ff detailliert beschrieben. Polypropylen hat jedoch den Nachteil, dass es sich nicht biologisch abbauen lässt.

### Anwendungstechnische Messungen:

Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards.

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul wurde mittels eines Zugversuchs an spritzgegossenen Schulterstäben nach ISO 527 bestimmt.

Die Charpy Schlagzähigkeit wurde gemäß ISO 179-2/1eU:1997 bestimmt. Der Probekörper (80mm x 10 mm x4 mm), gelagert nahe an seinen Enden als waagerechter Balken, wird durch einen einzelnen Schlag eines Pendels beansprucht, wobei die Aufschlaglinie in der Mitte zwischen den beiden Probekörper-Widerlagern liegt und (der Probekörper) mit einer hohen, nominell konstanten Geschwindigkeit (2,9 oder 3,8 m/s) gebogen wird.

### Die Abbauraten der biologisch abbaubaren Polyestermischungen und der zum Vergleich hergestellten Mischungen wurden wie folgt bestimmt:

Aus den biologisch abbaubaren Polyestermischungen und den zum Vergleich hergestellten Mischungen wurden durch Pressen bei 190°C jeweils Folien mit einer Dicke von 400 µm hergestellt. Diese Folien wurden jeweils in rechteckige Stücke mit Kantenlängen von 2 x 5 cm geschnitten. Das Gewicht dieser Folienstücke wurde bestimmt. Über einen Zeitraum von vier Wochen wurden die Folienstücke in einem Trockenschrank in einer mit befeuchteter Komposterde gefüllten Kunststoffdose auf 58 °C erhitzt. Im Wochenabstand wurde jeweils das verbleibende Gewicht der Folienstücke gemessen. Unter der Annahme, dass die biologische Abbaubarkeit in diesen Fällen als reiner Oberflächenprozess betrachtet werden kann, wurde zur Bestimmung der Steigung der erhaltenen Gewichtsabnahme (Geschwindigkeit des Bioabbaus) die Differenz aus dem nach einer Probennahme gemessenen Gewicht und der Masse der Folie vor Versuchsbeginn abzüglich der durchschnittlichen Gesamtgewichtsabnahme bis zur vorhergehenden Probenentnahme errechnet. Die erhaltene Massenreduktion wurde darüber hinaus auf die Oberfläche (in cm²) wie auch die Zeit zwischen aktueller und vorhergehender Probennahme (in d) normiert.

### Ausgangsstoffe

### Polyesterkomponente A:

A1: Polylbutylenadipat-coterephthalat (Adipinsäure : Terephthalsäure = 53 zu 47 mol%)
   MFR (190°C/2,16kg nach ISO1133) = 129-130 g/10min
   MFR (170°C / 2,16kg nach ISO1133) = 83-84,5 g/10min
A2: Polybutylenadipat-coterephthalat (Adipinsäure : Terephthalsäure = 53 zu 47 mol%) (Vergleichssytem)
   MFR (190°C/2,16kg nach ISO1133) = 2,5-4,5 g/ 10 min

### Polymilchsäure B

B1: Nature Works Ingeo® 3251D: MFR (190°C / 2,16kg nach ASTM D1238) = 35 g/10min

### Füllstoff C

C1: Mikrotalc IT Extra

### Gleitmittel D

D1: Erucasäureamid

Zur Bestimmung der biologischen Abbaubarkeit wurden mittels einer Formpresse Folien einer Dicke von etwa 420 µm hergestellt.

### Beispiele

### I) Herstellung der Polymermischungen Beispiel 1 (1) und Vergleichsbeispiel 2 (V-2) - allge meine Vorschrift

Die in Tabelle 1 aufgeführten Compounds wurden auf einem Extruder des Typs Coperion ZSB 40 gefertigt. Die Temperaturen am Austritt wurden auf 250°C eingestellt. Anschließend wurde das Extrudat unter Wasser granuliert.

**Tabelle 1- Hergestellte Compounds**

| Compound | Polyester A1 [Gew.-%*] | Polyester A2 (Vergleich) [Gew.-%*] | PLA B1 [Gew.-%*] | Füllstoff C1 [Gew.-%**] | Gleitmittel D1 [Gew.-%**] |
|---|---|---|---|---|---|
| **1** | 26,0 | | 74,0 | 15 | 0,5 |
| **V-2** | | 26,0 | 74,0 | 15 | 0,5 |
| | | | | | |

| | | | | | |
|---|---|---|---|---|---|
| *Bezogen auf die Komponenten A und B **Bezogen auf die Komponenten A bis D | | | | | |

### II) Herstellung der Formteile

Beide Materialien wurden auf einer Spritzgießmaschine vom Typ Netstal Typ Synergy 1200-230 mit einer Schnecke von 32,00 mm Durchmesser durchgeführt. Das Spritzgießwerkzeug war ein Einfachkavitätenwerkzeug mit offenem Heißkanal. Gefertigt wurde ein Becher mit 0,7 und 0,5 mm Wanddicke und einer Fließweglänge von 85 mm Länge (i = 120 für 0,7 mm und i = 168 mm für 0,5 mm).

### Versuch II-a: Becher mit 0,7 mm Wanddicke:

Bei der Verwendung des Materials V-2 (s. Tabelle 1) mit optimierten Herstellparametern benötigte die Maschine einen Einspritzdruck von 1700 bar. Bei der Verwendung der gleichen Herstellparameter mit dem Material 1 (s. Tabelle 1) konnte der Spritzdruck auf 1400 bar gesenkt werden. Weiterhin wurde der Versuch mit Material V-2 so gefahren, dass der Einspritzdruck auf 1400 bar, dem Wert des Materials 1, begrenzt wurde. Hierbei zeigte sich, dass die Form nur zu 80,1 % gefüllt wurde (s. Tabelle 2).

### Versuch II-b: Becher mit 0,5 mm Wanddicke:

Bei diesem Versuch wurde ebenfalls die o.g. Bechergeometrie bemustert, jedoch mit einer innenseitigen Wanddickenreduktion 0,7 auf 0,5 mm. Die Maschine sowie der restlichen Versuchsaufbau blieben unverändert.
Ähnlich wie beim Versuch II-a stellte sich heraus, dass die Geometrie mit dem Material V-2 am besten mit einem Einspritzdruck von 1700 bar herstellbar war. Bei der Verwendung der gleichen Herstellparameter jedoch unter Verwendung von Material 1 konnte der Spritzdruck auf 1400 bar gesenkt werden. Analog zu Versuch II-a wurde der Versuch mit Material V-2 so gefahren, dass der Einspritzdruck auf 1400 bar, sprich dem Wert des Materials 1, begrenzt wurde. Hierbei zeigte sich, dass die Form lediglich zu 65,7 % gefüllt wurde.

### III) Fließspiraltest

Die Werkzeugfüllung ist immer vom Fließverhalten der Schmelze abhängig. Das Fließverhalten bei einer bestimmten Temperatur kann mit einem Spiralwerkzeug auf einer handelsüblichen Spritzgießmaschine beurteilt werden. In diesem Werkzeug ist der von der Schmelze zurückgelegte Weg ein Maß für das Fließverhalten.
Für 1 und V-2 sind die Spirallängen in der Tabelle 2 aufgeführt. Der Füll- und Nachdruck wurde auf max. 1000 bar begrenzt. Die Nachdruckzeit war auf 5 sec limitiert. Der Einspritzvolumenstrom wurde mit 50 [cm³/s] gewählt. Die eingestellten Temperaturen betrugen für alle Versuchspunkte die Werkzeugoberflächen 30 °C und die Massetemperatur 205 °C. Zur Charakterisierung des maximalen Fließverhaltens eines Thermoplasts dient bei diesem Test der erreichbaren Spirallänge in Abhängigkeit der Spiraldicke. Daraus ergibt sich das Verhältnis von Fließweg zu Wanddicke. Dünnere Spiralen ergeben kleinere Fließweg-Wanddicken-Verhältnisse. Diese Verhältniszahlen (i) sind für 0,7 und 0,5 mm dicke Spiralen in der Tabelle 2 aufgeführt.

**Tabelle 2: Ergebnisse des Fließspiraltests und mechanische Daten von 1 und V-2**

| Beispiel | 1 | V-2 (Vergleich) |
|---|---|---|
| | | |
| Versuch II-a | | |
| Fließweglänge [mm] | 141 | 106 |
| Fließweg-Wanddicken-Verhältnis (i) bei 0,7 mm | i = 176,3 | i = 132,5 |
| Versuch II-b | | |
| Fließweglänge [mm] | 61 | 42 |
| Fließweg-Wanddicken-Verhältnis (i) bei 0,5 mm | i = 122 | i = 82 |
| MFR der Mischung (190°C, 2,16kg) | 34,6 | 9,8 |
| E-Modul [MPa] | 2697 | 2818 |
| Schlagzähigkeit / Charpy gemessen an Schulterstab bei 23°C a_{N} nach ISO 179/1 eU | 44,5 | 45,7 |

## Patentansprüche

1. Spritzgussverfahren zur Herstellung von Verpackungsmaterial mit einer Wanddicke von 0,3 bis 0,8 mm, enthaltend biologisch abbaubare Polymermischungen:
A) 15 bis 50 Gew.- %, bezogen auf die Komponenten A und B, eines biologisch abbaubaren, aliphatisch-aromatischen Polyesters mit einem MFR (190°C/2,16 kg nach ISO 1133) von 40 bis 150 g/10min enthaltend:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 100 mol %, bezogen auf die Komponenten i bis ii, eines C₂-C₈-Alkylendiols oder C₂-C₆-Oxyalkylendiols;
iv) 0 bis 2 Gew.-%, bezogen auf das Gesamtgewicht der Komponenten i bis iii, eines Kettenverlängerers und/oder Verzweigers ausgewählt aus der Gruppe bestehend aus: einem di- oder polyfunktionellen Isocyanat, Isocyanurat, Oxazolin , Epoxid, Carbonsäureanhydrid und/oder einem mindestens trifunktionellen Alkohol oder einer mindestens trifunktionellen Carbonsäure;
B) 50 bis 85 Gew.-%, bezogen auf die Komponenten A und B, Polymilchsäure mit einem MFR (190°C/2,16 kg nach ASTM D1238) von 5 bis 50 g/10min,
C) 0 bis 40 Gew.-%, bezogen auf das Gesamtgewicht der Komponenten A bis D, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern und
D) 0 bis 3 Gew.-%, bezogen auf das Gesamtgewicht der Komponenten A bis D, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;

2. Spritzgussverfahren nach Anspruch 1, wobei die Komponenten i) und ii) des Polyesters A wie folgt definiert sind:
i) 52 bis 65 mol %, bezogen auf die Komponenten i bis ii, Adipinsäure oder/oder Sebazinsäurederivate;
ii) 48 bis 35 mol %, bezogen auf die Komponenten i bis ii, eines Terephthalsäurederivats.

3. Spritzgussverfahren nach Anspruch 1 oder 2, wobei als Komponente iv) des Polyesters A 0,01 bis 1,5 Gew.-%, bezogen auf das Gesamtgewicht der Komponenten i bis iii, eines mindestens trifunktionellen Alkohols eingesetzt werden.

4. Spritzgussverfahren nach den Ansprüchen 1 bis 3, wobei als Füllstoff C aus 5 bis 30 Gew.-%, bezogen auf das Gesamtgewicht der Komponenten A bis D, Calciumcarbonat und/oder Kreide eingesetzt wird.

## Claims

1. An injection-molding process for the production of packaging material with wall thickness from 0.3 to 0.8 mm comprising biodegradable polymer mixtures:
A) from 15 to 50% by weight, based on components A and B, of a biodegradable, aliphatic-aromatic polyester with MFR (190°C/2.16 kg in accordance with ISO 1133) of from 40 to 150 g/10 min comprising:
i) from 40 to 70 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 60 to 30 mol%, based on components i to ii, of a terephthalic acid derivative;
iii)from 98 to 100 mol%, based on components i to ii, of a C₂-C₈-alkylenediol or C₂-C₆-oxyalkylenediol;
iv) from 0 to 2% by weight, based on the total weight of components i to iii, of a chain extender and/or branching agent selected from the group consisting of: a di- or polyfunctional isocyanate, isocyanurate, oxazoline, epoxide, and carboxylic anhydride, and/or of an at least trihydric alcohol, or of an at least tribasic carboxylic acid;
B) from 50 to 85% by weight, based on components A and B, of polylactic acid with MFR (190°C/2.16 kg in accordance with ASTM D1238) of from 5 to 50 g/10 min,
C) from 0 to 40% by weight, based on the total weight of components A to D, of an organic filler selected from the group consisting of: native or plastified starch, natural fibers, and wood flour, and/or of an inorganic filler selected from the group consisting of: chalk, calcium carbonate, graphite, gypsum, conductive carbon black, iron oxide, calcium chloride, dolomite, kaolin, silicon dioxide (quartz), sodium carbonate, titanium dioxide, silicate, wollastonite, mica, montmorillonite, talc powder, glass fibers, and mineral fibers, and
D) from 0 to 3% by weight, based on the total weight of components A to D, of at least one stabilizer, nucleating agent, lubricant and release agent, surfactant, wax, antistatic agent, antifogging agent, dye, pigment, UV absorber, UV stabilizer, or other plastics additive.

2. The injection-molding process according to claim 1, where the definitions of components i) and ii) of the polyester A are as follows:
i) from 52 to 65 mol%, based on components i to ii, of adipic acid or/or of sebacic acid derivatives;
ii) from 48 to 35 mol%, based on components i to ii, of a terephthalic acid derivative.

3. The injection-molding process according to claim 1 or 2, where component iv) used in the polyester A comprises from 0.01 to 1.5% by weight, based on the total weight of components i to iii, of an at least trihydric alcohol.

4. The injection-molding process according to claims 1 to 3, where filler C used of comprises from 5 to 30% by weight, based on the total weight of components A to D, of calcium carbonate and/or chalk.

## Revendications

1. Procédé de moulage par injection pour la fabrication d'un matériau d'emballage ayant une épaisseur de paroi de 0,3 à 0,8 mm, contenant des mélanges de polymères biodégradables :
A) 15 à 50 % en poids, par rapport aux composants A et B, d'un polyester aliphatique-aromatique biodégradable ayant un MFR (190 °C/2,16 kg selon ISO 1133) de 40 à 150 g/10 min, contenant :
i) 40 à 70 % en moles, par rapport aux composants i à ii, d'un ou de plusieurs dérivés d'acides dicarboxyliques ou d'acides dicarboxyliques choisis dans le groupe constitué par : l'acide succinique, l'acide adipique, l'acide sébacique, l'acide azélaïque et l'acide brassylique ;
ii) 60 à 30 % en moles, par rapport aux composants i à ii, d'un dérivé de l'acide téréphtalique ;
iii) 98 à 100 % en moles, par rapport aux composants i à ii, d'un alkylène-diol en C₂-C₈ ou d'un oxyalkylène-diol en C₂-C₆;
iv) 0 à 2 % en poids, par rapport au poids total des composants i à iii, d'un allongeur de chaînes et/ou d'un agent de ramification choisi dans le groupe constitué par : un isocyanate di- ou polyfonctionnel, un isocyanurate, une oxazoline, un époxyde, un anhydride d'acide carboxylique et/ou un alcool au moins trifonctionnel ou un acide carboxylique au moins trifonctionnel ;
B) 50 à 85 % en poids, par rapport aux composants A et B, d'acide polylactique ayant un MFR (190 °C/2,16 kg selon ASTM D1238) de 5 à 50 g/10 min,
C) 0 à 40 % en poids, par rapport au poids total des composants A à D, d'une charge organique choisie dans le groupe constitué par : les amidons naturels ou plastifiés, les fibres naturelles, la farine de bois et/ou une charge inorganique choisie dans le groupe constitué par : la craie, le carbonate de calcium, le graphite, le gypse, le noir de carbone conducteur, l'oxyde de fer, le chlorure de calcium, la dolomite, le kaolin, le dioxyde de silicium (quartz), le carbonate de sodium, le dioxyde de titane, le silicate, la wollastonite, le mica, la montmorillonite, le talc, les fibres de verre et les fibres minérales, et
D) 0 à 3 % en poids, par rapport au poids total des composants A à D, d'au moins un stabilisateur, un agent de nucléation, un agent lubrifiant et démoulant, un tensioactif, une cire, un antistatique, un agent antibuée, un colorant, un pigment, un absorbeur UV, un stabilisateur UV ou d'autres additifs pour plastiques.

2. Procédé de moulage par injection selon la revendication 1, dans lequel les composants i) et ii) du polyester A sont définis de la manière suivante :
i) 52 à 65 % en moles, par rapport aux composants i à ii, d'acide adipique ou/ou de dérivés de l'acide sébacique ;
ii) 48 à 35 % en moles, par rapport aux composants i à ii d'un dérivé de l'acide téréphtalique.

3. Procédé de moulage par injection selon la revendication 1 ou 2, dans lequel 0,01 à 1,5 % en poids, par rapport au poids total des composants i à iii, d'un alcool au moins trifonctionnel est utilisé en tant que composant iv) du polyester A.

4. Procédé de moulage par injection selon les revendications 1 à 3, dans lequel de 5 à 30 % en poids, par rapport au poids total des composants A à D, de carbonate de calcium et/ou de craie sont utilisés en tant que charge C.
